# EUROPÄISCHE PATENTSCHRIFT

(11) **EP 4 022 279 B1**
(45) Veröffentlichungstag und Bekanntmachung des Hinweises auf die Patenterteilung: **11.03.2026**
(21) Anmeldenummer: 20771204.3
(22) Anmeldetag: 20.08.2020
(51) Int. Cl.: G01N 15/06, G01N 27/04

(54) **ELEKTRISCHE ANLAGE UND VERFAHREN ZUM FESTSTELLEN EINER POTENTIELLEN FUNKTIONSBEEINTRÄCHTIGUNG IN DER ELEKTRISCHEN ANLAGE**
ELECTRICAL SYSTEM AND METHOD FOR DETERMINING A POTENTIAL FUNCTIONAL IMPAIRMENT IN THE ELECTRICAL SYSTEM
SYSTÈME ÉLECTRIQUE ET PROCÉDÉ DE DÉTERMINATION D'UNE DÉFICIENCE FONCTIONNELLE POTENTIELLE DANS LE SYSTÈME ÉLECTRIQUE

(30) Priorität: 20.09.2019 DE 102019214342
(43) Veröffentlichungstag der Anmeldung: 06.07.2022
(73) Patentinhaber: Siemens Energy Global GmbH & Co. KG, 81739 München (DE)
(72) Erfinder: RABE, Thomas, 71384 Weinstadt (DE)
(86) Internationale Anmeldenummer: PCT/EP2020/073283
(87) Internationale Veröffentlichungsnummer: WO 2021/052701

(56) Entgegenhaltungen:
- DE-A1- 102006 042 508
- DE-A1- 102009 035 296
- DE-A1- 102011 106 632
- DE-A1- 102014 204 883

## Beschreibung

Die Erfindung betrifft eine elektrische Anlage mit einem Anlagengehäuse und elektrischen Bauelementen, wobei die elektrischen Bauelemente in dem Anlagengehäuse angeordnet sind und zumindest zwei Stromleiter zumindest eines der elektrischen Bauelemente mittels eines elektrischen Isolators voneinander elektrisch isoliert sind. Ferner betrifft die Erfindung ein Verfahren zum Feststellen einer potentiellen Funktionsbeeinträchtigung in der elektrischen Anlage.

Bei derartigen elektrischen Anlagen besteht die Problematik, dass eine Ablagerung von elektrisch leitfähigen Fremdstoffen eine Funktionsbeeinträchtigung der elektrischen Anlage zur Folge haben kann. Die elektrisch leitfähigen Fremdstoffe können beispielsweise Staub, insbesondere metallische Stäube oder Ruß, Asche, Faserstaub und dergleichen, sowie Feuchtigkeit sein. Ferner kann es zu einer Kombination aus abgelagerten Stäuben und Feuchtigkeit kommen. Die Feuchtigkeit kann dabei beispielsweise durch einen, insbesondere salzhaltigen, Nebel oder Betauung hinzukommen. Dabei werden auch elektrisch nicht leitfähige Stäube elektrisch leitfähig und elektrisch leitfähige Stäube noch leitfähiger, da sich der elektrische Widerstand einer solchen Fremdstoffschicht verringert. Derartige Fremdstoffe können beispielsweise durch Lüftungsgitter des Anlagengehäuses hindurchtreten und sich innerhalb des Anlagengehäuses auf die elektrischen Bauelemente und den elektrischen Isolator der elektrischen Anlage absetzen.

Problematisch ist insbesondere eine Ablagerung der elektrisch leitfähigen Fremdstoffe auf der Oberfläche des elektrischen Isolators, auf der sich eine elektrisch leitfähige Fremdstoffschicht bilden kann. Entlang der elektrisch leitfähigen Fremdstoffschicht kann ein Strom von zwei mittels des elektrischen Isolators elektrisch voneinander isolierten Stromleitern eines oder mehrere Bauelemente der elektrischen Anlage fließen. Kritisch wird die elektrisch leitfähige Fremdstoffschicht dann, wenn sie durch Kondensation feuchter Luft oder anderen Eintrag von Feuchtigkeit feucht wird. Entlang eines Strompfades eines Stromes zwischen den Stromleitern und durch die feuchte elektrisch leitfähige Fremdstoffschicht kommt es mit der Zeit zu einer lokalen Erwärmung der feuchten elektrisch leitfähigen Fremdstoffschicht, wodurch ein Bereich der feuchten elektrisch leitfähigen Fremdstoffschicht austrocknet. Ist der trockene Bereich groß genug, um den fließenden Strom zu unterbrechen, kommt es zu einem Spannungsfall über den trockenen Bereich. Bei hinreichender Spannung kommt es schließlich zu einem Lichtbogen über den trockenen Bereich bis hin zu einem elektrischen Überschlag.

Der elektrische Überschlag kann zu einem Kurzschluss der elektrischen Anlage führen. Ein Kurzschluss kann zu unerwünschten Unterbrechungen im Betrieb der elektrischen Anlage, insbesondere durch Auslösen einer elektrischen Sicherung der elektrischen Anlage, führen. Die Ursache des Kurzschlusses muss mit hohem Aufwand untersucht werden. Ferner kann ein Kurzschluss zu einer Beschädigung der elektrischen Anlage, insbesondere des elektrischen Isolators, führen.

Aus der DE 10 2009 035 296 A1 ist eine elektrische Schaltanordnung mit einem Gehäuse bekannt, die eine Detektionseinrichtung aufweist, die die Bildung einer Materialschicht in einem Erfassungsbereich der Detektionseinrichtung innerhalb des Gehäuses feststellt. Die Detektionseinrichtung ist mit Mitteln zur optischen Detektion von Fremdschichten ausgebildet.

Es ist wünschenswert, mit geringen Kosten eine zuverlässige und präzise Detektion von elektrisch leitfähigen Fremdstoffschichten in einer elektrischen Anlage bereitzustellen, um potentielle Funktionsbeeinträchtigungen der elektrischen Anlage zu erkennen.

Aufgabe der Erfindung ist es daher, eine elektrische Anlage bereitzustellen, in der potentielle Funktionsbeeinträchtigungen aufgrund elektrisch leitfähiger Fremdschichten zuverlässig, präzise und mit geringem Kostenaufwand erkannt werden.

Die voranstehende Aufgabe wird durch die Gegenstände der Patentansprüche, insbesondere durch eine elektrische Anlage nach Anspruch 1 und ein Verfahren nach Anspruch 14 gelöst. Weitere Vorteile und Details der Erfindung ergeben sich aus den Unteransprüchen, der Beschreibung und den Zeichnungen. Dabei gelten Merkmale und Details, die im Zusammenhang mit der erfindungsgemäßen Anlage offenbart sind, selbstverständlich auch im Zusammenhang mit dem erfindungsgemäßen Verfahren, sodass bezüglich der Offenbarung zu den einzelnen Erfindungsaspekten stets wechselseitig Bezug genommen wird beziehungsweise werden kann.

Die gestellte Aufgabe wird gemäß einem ersten Aspekt gelöst durch eine elektrische Anlage mit einem Anlagengehäuse und elektrischen Bauelementen, wobei die elektrischen Bauelemente in dem Anlagengehäuse angeordnet sind und zumindest zwei Stromleiter zumindest eines der elektrischen Bauelemente mittels eines elektrischen Isolators voneinander elektrisch isoliert sind, wobei die elektrische Anlage ein Sensorsystem aufweist, das zum Detektieren einer Ablagerung einer elektrisch leitfähigen Fremdstoffschicht auf dem elektrischen Isolator ausgebildet ist, wobei das Sensorsystem eine innerhalb des Anlagengehäuses angeordnete Messfläche aufweist, auf der zumindest zwei voneinander beabstandete Elektroden angeordnet sind, und das Sensorsystem eine Messschaltung aufweist, die dazu ausgebildet ist, einen Parameter zu messen, der von dem zwischen den zumindest zwei Elektroden fließenden Strom abhängt.

Mit anderen Worten ist der Parameter ein Maß für die elektrische Leitfähigkeit der Fremdschicht zwischen den zumindest zwei Elektroden. Der Parameter kann beispielsweise eine Stromstärke sein. Dazu kann eine Spannung der Messschaltung vorgegeben werden.

Entsprechend kann die elektrische Anlage eine potentielle Funktionsbeeinträchtigung mittels einer sich auf der Messfläche ablagernden elektrisch leitfähigen Fremdstoffschicht erkennen. Eine Funktionsbeeinträchtigung kann dabei beispielsweise ein Kurzschluss der elektrischen Anlage sein. Eine Funktionsbeeinträchtigung kann somit zum außerplanmäßigen Stillstand der elektrischen Anlage führen. Mittels der in dem Anlagengehäuse angeordneten Messfläche und der Messschaltung des Sensorsystems erfolgt die Messung einer Ablagerung einer elektrisch leitfähigen Fremdstoffschicht auf der Messfläche sehr zuverlässig, präzise und kostengünstig.

Dass zumindest zwei Stromleiter zumindest eines der elektrischen Bauelemente mittels eines elektrischen Isolators voneinander elektrisch isoliert sind kann bedeuten, dass die zumindest zwei Stromleiter von demselben elektrischen Bauelement sind. Es kann aber auch bedeuten, dass die zumindest zwei Stromleiter von unterschiedlichen elektrischen Bauelementen sind. Es kann nämlich durch die Ablagerung elektrisch leitfähiger Fremdstoffschichten zu Kurzschlüssen sowohl zwischen Stromleitern derselben elektrischen Bauelemente als auch zwischen Stromleitern unterschiedlicher elektrischer Bauelemente kommen. Ferner können mehrere elektrische Isolatoren zwischen den Stromleitern der elektrischen Bauelemente angeordnet sein. Mithilfe der elektrischen Anlage kann grundsätzlich eine potentielle Funktionsbeeinträchtigung unabhängig von einer der vorgenannten Konstellationen erkannt werden. Ferner ermöglicht es die Erfindung, eine potentielle Funktionsbeeinträchtigung durch einen Stromfluss von einem Stromleiter zu der Erde frühzeitig zu erkennen.

In der elektrischen Anlage kann die Messfläche derart angeordnet und ausgebildet sein, dass die elektrisch leitfähige Fremdstoffschicht auf dem elektrischen Isolator oder mehreren elektrischen Isolatoren zwischen Stromleitern nur indirekt und/oder nur teilweise direkt mittels der Messfläche erfasst wird. Indirekt meint, dass die Messfläche nicht die elektrisch leitfähige Fremdstoffschicht auf dem elektrischen Isolator oder den elektrischen Isolatoren selbst misst, sondern eine sich auf der Messfläche ablagernde elektrisch leitfähige Fremdstoffschicht misst. Dazu kann die Messfläche beabstandet von dem elektrischen Isolator oder den elektrischen Isolatoren angeordnet sind. Anhand der Ablagerung auf der Messfläche kann mit hoher Sicherheit geschätzt werden, ob und wie stark eine elektrisch leitfähige Fremdstoffschicht auf dem elektrischen Isolator oder den elektrischen Isolatoren ausgeprägt ist. Alternativ oder zusätzlich kann die Messfläche auf der Oberfläche des elektrischen Isolators oder können mehrere Messflächen auf Oberflächen mehrerer elektrischer Isolatoren angeordnet werden. Dadurch kann die elektrisch leitfähige Fremdstoffschicht direkt erfasst werden.

Bevorzugt sind die zumindest zwei Elektroden als Leiterbahnen ausgebildet. Dies ermöglicht eine einfache Abdeckung einer großen Messfläche mittels der zumindest zwei Elektroden, um verlässliche Ergebnisse des Sensorsystems zu erhalten.

Ferner bevorzugt verläuft zumindest eine der zumindest zwei Leiterbahnen kammförmig. Eine Kammform wird dabei insbesondere durch zumindest eine äußere Leiterbahn und an der äußeren Leiterbahn angeordnete, voneinander beabstandete und quer, insbesondere senkrecht, von der äußeren Leiterbahn abgehende innere Leiterbahnen gebildet. Insbesondere können zwei Leiterbahnen kammförmig ausgebildet sein und ineinander verschachtelt sein. Dabei können die inneren Leiterbahnen abwechselnd nebeneinander, insbesondere parallel zueinander, angeordnet sein.

Weiterhin bevorzugt sind die zumindest zwei Leiterbahnen ineinander verschachtelt. Dabei können die Leiterbahnen nebeneinander, insbesondere parallel zueinander, angeordnet sein. Beispielsweise können mehrere Leiterbahnen in einer kammförmigen Leiterbahn verschachtelt sein. Dabei verlaufen die mehreren Leiterbahnen neben und insbesondere parallel zu inneren Leiterbahnen der kammförmigen Leiterbahn.

Vorzugsweise sind die zumindest zwei Elektroden stromführend mit einer Wechselspannungsquelle verbunden. Die Messschaltung kann diese Wechselspannungsquelle aufweisen. Grundsätzlich können die zumindest zwei Elektroden stromführend mit einer Spannungsquelle, beispielsweise auch einer Gleichspannungsquelle, verbunden sein, die die Messschaltung aufweisen kann. Eine Wechselspannungsquelle hat jedoch gegenüber einer Gleichspannungsquelle den Vorteil, dass es an den Elektroden zu keiner elektrolytischen Korrosion kommt. Dadurch können eine Wartungsfreiheit und Lebensdauer des Sensorsystems erhöht werden.

Ferner vorzugsweise ist die Messfläche an und/oder auf dem elektrischen Isolator angeordnet. Dadurch kann ein Teil der elektrisch leitfähigen Fremdstoffschicht auf dem elektrischen Isolator direkt gemessen werden, sodass besonders genaue Messergebnisse erhalten werden können.

Außerdem vorzugsweise ist die Messfläche innerhalb des Anlagengehäuses horizontal oder im Wesentlichen horizontal angeordnet. Horizontal meint dabei eine Anordnung senkrecht zur Richtung der Schwerkraft. Im Wesentlichen horizontal meint, dass Abweichungen von einer horizontalen Anordnung um bis zu 20° möglich sind. Mit anderen Worten kann auch gesagt werden, dass die Messfläche parallel oder im Wesentlichen parallel zu einer Bodenfläche angeordnet ist. Die Bodenfläche kann beispielsweise die des Anlagengehäuses sein, mit der die elektrische Anlage auf einem Boden abgestellt bzw. installiert wird, oder kann beispielsweise die des Bodens sein, auf dem die elektrische Anlage abgestellt oder installiert wird. Durch die horizontale Anordnung der Messfläche kann aufgrund der sich durch die Schwerkraft absetzenden Fremdstoffe eine möglichst große Ablagerung von elektrisch leitfähiger Fremdstoffschicht gemessen werden.

Die Messfläche kann insbesondere parallel oder im Wesentlichen parallel zu einer Oberfläche des elektrischen Isolators angeordnet sein. Im Wesentlichen parallel meint dabei, dass Abweichungen von einer parallelen Anordnung um bis zu 20° möglich sind. Dadurch kann sichergestellt werden, dass die Messfläche eine möglichst ähnliche Orientierung in dem Anlagengehäuse relativ zu dem elektrischen Isolator aufweist, sodass die elektrisch leitfähige Fremdstoffschicht auf der Messfläche aufgrund der in dem Anlagengehäuse herrschenden Luftzirkulation mit hoher Wahrscheinlichkeit der elektrisch leitfähigen Fremdstoffschicht auf der Oberfläche des elektrischen Isolators, wie beispielsweise hinsichtlich Staubzusammensetzung, Schichtdicke und Feuchtigkeit entspricht. Denn je nachdem, in welcher Orientierung relativ zu der Oberfläche des elektrischen Isolators oder den Oberflächen der elektrischen Isolatoren und an welchem Ort relativ zu Lüftungsschlitzen, Lüftungskanäle oder Lüftungsgitter sowie dem Anlagengehäuse die Messfläche angeordnet ist, kann sich die darauf ablagernde Fremdstoffschicht unterschiedlich ausprägen.

Es ist bevorzugt, dass ein Träger der Messfläche, auf dem die zumindest zwei Elektroden angeordnet sind, das gleiche Isoliermaterial wie der elektrische Isolator aufweist. Insbesondere besteht der Träger bzw. ein Trägermaterial der Messfläche aus dem gleichen Isoliermaterial wie der elektrische Isolator. Da Fremdstoffe an unterschiedliche Materialien unterschiedlich gut haften, kann dadurch sichergestellt werden, dass durch Messung der auf der Messfläche abgelagerten elektrisch leitfähigen Fremdstoffschicht die elektrisch leitfähige Fremdstoffschicht auf dem elektrischen Isolator möglichst präzise detektiert wird.

Das Sensorsystem weist eine Heizvorrichtung zum Beheizen der Messfläche auf. Da sich die elektrischen Bauelemente und damit der oder die elektrischen Isolatoren im Betrieb üblicherweise mehr als die Messfläche erwärmen, kommt es an der Messfläche zu einer Kondensation feuchter Luft noch bevor eine Kondensation an dem oder den elektrischen Isolatoren auftritt. Dadurch besteht das Risiko, dass fälschlicherweise eine potentielle Funktionsbeeinträchtigung von dem Sensorsystem erkannt wird, obwohl sich an dem oder den elektrischen Isolatoren kein Kondensat gebildet hat, das die Leitfähigkeit einer Fremdstoffschicht bedingen oder erhöhen würde. Mittels der Heizvorrichtung ist es demnach möglich, eine solche falsche Erkennung zu vermeiden, in dem die Messfläche beheizt wird.

Die elektrische Anlage weist einen Temperatursensor zum Erfassen einer Temperatur der elektrischen Anlage auf, und eine mit dem Temperatursensor und der Heizvorrichtung verbundene Regelungsvorrichtung, die dazu ausgebildet ist, die Temperatur der Messfläche entsprechend der Temperatur der elektrischen Anlage zu regeln. Die Temperatur der elektrischen Anlage kann beispielsweise eine Innenraumtemperatur in dem Anlagengehäuse sein. Der Temperatursensor kann entsprechend ein Lufttemperatursensor in dem Anlagengehäuse sein. Ferner kann die Temperatur der elektrischen Anlage die an einem oder mehreren elektrische Bauelemente oder an einem oder mehreren elektrischen Isolatoren gemessene Temperatur sein. Der Temperatursensor kann entsprechend an dem einen oder den mehreren elektrischen Bauelementen oder an dem einen oder den mehreren elektrischen Isolatoren angeordnet sein. Insbesondere kann auch das Sensorsystem den Temperatursensor aufweisen. Möglich ist zudem eine Kombination mehrerer Temperatursensoren an unterschiedlichen Orten in dem Anlagengehäuse, beispielsweise an unterschiedlichen elektrischen Bauelementen und elektrischen Isolatoren. Dabei kann ein aus den von den mehreren Temperatursensoren gemessenen Temperaturen abgeleiteter Temperaturwert, beispielsweise ein Mittelwert, als Temperatur der elektrischen Anlage herangezogen werden. Dass die Regelungsvorrichtung dazu ausgebildet ist, die Temperatur der Messfläche entsprechend der Temperatur der elektrischen Anlage zu regeln kann bedeuten, die Temperatur der Messfläche auf die Temperatur der elektrischen Anlage zu regeln.

Bevorzugt ist jedoch die Regelungsvorrichtung dazu ausgebildet, die Temperatur der Messfläche auf eine Temperatur unterhalb der Temperatur der elektrischen Anlage zu regeln, sodass zwischen der Temperatur der Messfläche und der Temperatur der elektrischen Anlage ein Temperaturabstand besteht. Dieser Temperaturabstand kann ein vordefinierter Temperaturabstand sein. Der vordefinierte Temperaturabstand kann ein absoluter Temperaturabstand oder ein prozentualer Temperaturabstand sein, der prozentual anhand der Temperatur der elektrischen Anlage bestimmt wird. Der Temperaturabstand kann beispielsweise in einem Bereich von 1 °C bis 5 °C, insbesondere 2 °C bis 4 °C liegen. Dadurch lässt sich eine potentielle Funktionsbeeinträchtigung der elektrischen Anlage wegen Kondensation auf einer im trockenen Zustand nicht leitfähigen Fremdstoffschicht oder elektrisch leitfähigen Fremdstoffschicht mittels des Sensorsystems feststellen, noch bevor es zu einer solchen Funktionsbeeinträchtigung kommt. Dadurch können sodann noch geeignete Maßnahmen ergriffen werden, um die Funktionsbeeinträchtigung zu vermeiden.

Die Messchaltung ist mit einer Auswerteeinheit verbunden, die dazu ausgebildet ist, den gemessenen Parameter des zwischen den zumindest zwei Elektroden fließenden Stromes mit einem Schwellenwert zu vergleichen und eine Meldung einer potentiellen Funktionsbeeinträchtigung der elektrischen Anlage auszugeben, wenn der gemessene Parameter den Schwellenwert überschritten hat. Der Schwellenwert kann ein vordefinierter Schwellenwert sein, der noch unterhalb des Parameters liegt, die für eine Funktionsbeeinträchtigung, wie beispielsweise einen Kurzschluss, sorgen würde. Die elektrische Anlage, insbesondere das Sensorsystem, kann die Auswerteeinheit aufweisen. Möglich ist auch, dass das Sensorsystem ein drahtloses Kommunikationsgerät aufweist, das zur drahtlosen Kommunikation mit der Auswerteeinheit eingerichtet ist. Entsprechend kann die Auswerteeinheit beispielsweise in einem zentralen Computer angeordnet sein, der mehrere elektrische Anlagen auf potentielle Funktionsbeeinträchtigungen hin überwachen kann. Die Meldung kann beispielsweise optisch an einem Bildschirm der Auswerteeinheit oder der elektrischen Anlage und/oder akustisch ausgegeben werden. Die Meldung kann auch eine steuertechnische Meldung in Form einer Anweisung an die elektrische Anlage sein. Beispielsweise kann die Anweisung darin bestehen, den Betrieb der elektrischen Anlage einzustellen, eine Betriebslast der elektrischen Anlage zu senken oder eine Drehzahl eines oder mehrerer Lüfter der elektrischen Anlage zu erhöhen.

Ferner ist bevorzugt, dass die elektrische Anlage ein Transformator ist. Der Transformator kann beispielsweise ein Leistungstransformator, Verteiltransformator oder dergleichen sein. Der Transformator kann insbesondere ein Trockentransformator, ganz besonders ein Gießharztransformator sein. Anders als ölgefüllte Transformatoren sind diese besonders empfindlich für Verschmutzungen. Transformatoren werden in unterschiedlichen Umgebungen eingesetzt und können dabei sehr geringen Temperaturen, sehr hohen Temperaturen, Temperaturschwankungen, Witterungsverhältnissen, feuchter Luft, salzhaltiger Luft oder anderweitig mit beispielsweise Stäuben verunreinigter Luft ausgesetzt sein, die eine Funktionsbeeinträchtigung unterstützen oder verursachen können. Alternativ kann die elektrische Anlage beispielsweise ein Umrichter, eine Schaltanlage oder ein Schaltgerät sein.

Die gestellte Aufgabe wird gemäß einem zweiten Aspekt gelöst durch ein Verfahren zum Feststellen einer potentiellen Funktionsbeeinträchtigung in einer elektrischen Anlage nach einem der voranstehenden Ansprüche, wobei das Verfahren die Schritte aufweist: Messen eines Parameters eines Stromes zwischen den zumindest zwei Elektroden, Vergleichen des gemessenen Parameters mit einem Schwellenwert, und Ausgeben einer Meldung einer potentiellen Funktionsbeeinträchtigung der elektrischen Anlage, wenn der gemessene Parameter den Schwellenwert überschreitet.

Bevorzugt weist das Verfahren ferner die Schritte auf: Ermitteln eines Anstieges des Parameters zwischen Messzeitpunkten des Messens, und Berechnen eines Schwellenzeitpunktes zu dem der Parameter voraussichtlich den Schwellenwert überschreiten wird anhand des Anstieges des Parameters. Mit anderen Worten wird ein zeitlicher Anstieg des Parameters zur Prognose des voraussichtlichen Schwellenzeitpunktes herangezogen. Dadurch können beispielsweise notwendige Wartungszeitpunkte, zu denen die elektrische Anlage gereinigt werden muss, ökonomischer festgelegt werden.

Weiterhin bevorzugt kann das Verfahren die Schritte aufweisen: Erfassen einer Temperatur der elektrischen Anlage, und Regeln einer Temperatur der Messfläche entsprechend der Temperatur der elektrischen Anlage. Insbesondere kann die Temperatur der Messfläche auf die Temperatur unterhalb der Temperatur der elektrischen Anlage geregelt werden, sodass zwischen der Temperatur der Messfläche und der Temperatur der elektrischen Anlage der Temperaturabstand besteht.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigt:
- Fig. 1: eine perspektivische Seitenansicht auf ein Ausführungsbeispiel einer erfindungsgemäßen elektrischen Anlage mit einem Anlagengehäuse,
- Fig. 2: eine perspektivische Seitenansicht auf die elektrische Anlage aus Fig. 1 ohne das Anlagengehäuse,
- Fig. 3: eine perspektivische Seitenansicht auf ein Sensorsystem der elektrischen Anlage aus Fig. 2, und
- Fig. 4: eine Ansicht entlang eines Schnittes durch das Sensorsystem aus Fig. 3.

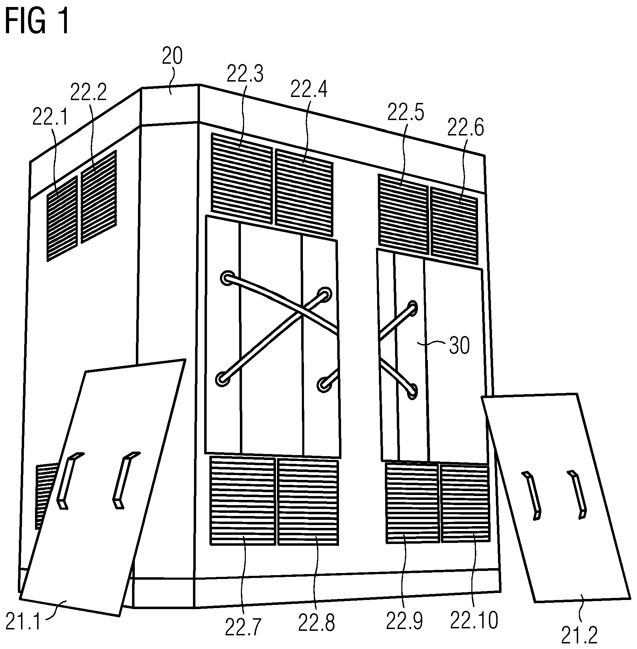

Elemente mit gleicher Funktion und Wirkungsweise sind in den Figuren 1 bis 4 jeweils mit denselben Bezugszeichen versehen.

Figur 1 zeigt eine perspektivische Seitenansicht auf ein Ausführungsbeispiel einer erfindungsgemäßen elektrischen Anlage 30 mit einem Anlagengehäuse 20. Die elektrische Anlage 30 ist in dem vorliegenden Ausführungsbeispiel als ein Transformator, insbesondere ein Gießharztransformator, ausgebildet.

Die elektrische Anlage 30 ist von dem Gehäuse 20 umschlossen. Das Gehäuse 20 ist hier mit entnommenen Türen 21 und damit in einem geöffneten Zustand gezeigt, der einen Blick auf die elektrische Anlage 30 ermöglicht. Das Gehäuse 20 dient unter anderem dem Schutz vor äußeren Witterungseinflüssen und dem Ablagern von Fremdstoffen auf der elektrischen Anlage 30. Um eine Belüftung der elektrischen Anlage 30 zu ermöglichen, ist eine Vielzahl von Lüftungsgittern 22.1, 22.2, 22.3, 22.4, 22.5, 22.6, 22.7, 22.8, 22.9, 22.10 in dem Gehäuse 20 angeordnet. Durch die Lüftungsgitter 22.1, 22.2, 22.3, 22.4, 22.5, 22.6, 22.7, 22.8, 22.9, 22.10 können trotz des Gehäuses 20 feuchte Luft, salzhaltige Luft und zumindest geringe Mengen elektrisch leitfähiger sowie nicht elektrisch leitfähiger Fremdstoffe an die elektrische Anlage 30 gelangen.

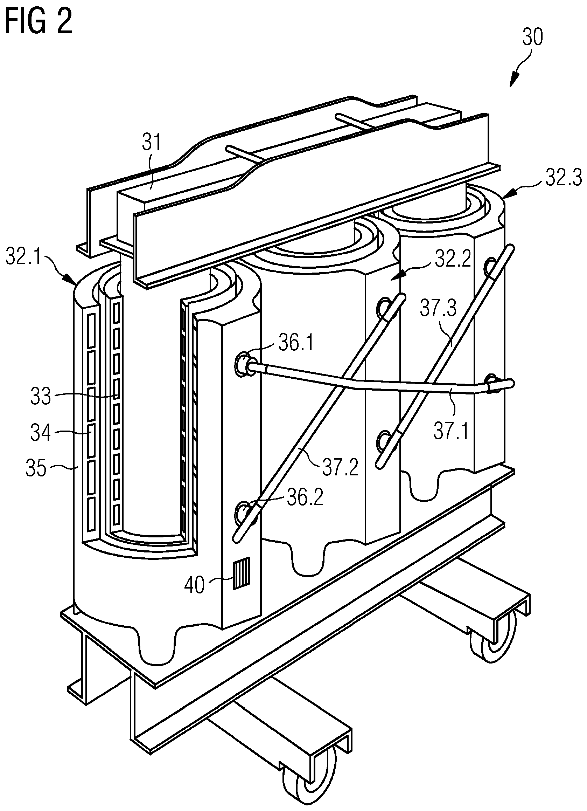

Figur 2 zeigt eine perspektivische Seitenansicht auf die elektrische Anlage 30 aus Fig. 1 ohne das Anlagengehäuse 20. Die elektrische Anlage 30 weist mehrere elektrische Bauelemente auf, wovon ein erstes elektrisches Bauelement 31, ein zweites elektrisches Bauelement 33 und ein drittes elektrisches Bauelement 34 bezeichnet sind. Im vorliegenden Ausführungsbeispiel des Gießhartransformators ist das erste elektrische Bauelement 31 ein Dreischenkelkern, das zweite elektrische Bauelement 33 eine Unterspannungswicklung und das dritte elektrische Bauelement 34 eine Oberspannungswicklung. Das zweite elektrische Bauelement 33 und das dritte elektrische Bauelement 34 sind Teil einer Bauelementanordnung 32.1, die hier eine Spulenanordnung ist. Gleich aufgebaute Bauelementanordnungen 32.2, 32.3 in Form von Spulenanordnungen sind auf anderen Schenkeln des ersten elektrischen Bauelements 31 angeordnet. Die elektrischen Bauelemente 31, 33, 34 sind voneinander elektrisch isoliert, wobei nur ein elektrischer Isolator 35 bezeichnet ist. Der elektrische Isolator 35 ist um das dritte elektrische Bauelement 34 herum angeordnet und isoliert zwei erste Stromleiter 36.1, 36.2 des dritten elektrischen Bauelementes 34 voneinander. Die ersten Stromleiter 36.1, 36.2 sind vorliegend als Stromanschlüsse von zwei zweiten Stromleitern 37.1, 37.2 der als Stromschienen ausgebildeten Stromleiter 37.1, 37.2, 37.3 ausgebildet. Der elektrische Isolator 35 ist im vorliegenden Ausführungsbeispiel auf Epoxidharzbasis.

Auf dem elektrischen Isolator 35 ist eine Messfläche 42 eines Sensorsystems 40 angeordnet. Die Messfläche 42 kann alternativ auch an einem anderen Ort in dem Anlagengehäuse 20, beispielsweise an dem Anlagengehäuse 20 oder an einem anderen Bereich oder einer anderen Komponente der elektrischen Anlage 30, beispielsweise an dem ersten elektrischen Bauelement 31, angeordnet sein. Ferner kann die Messfläche 42, nicht wie gezeigt parallel zu einer Oberfläche des elektrischen Isolators 35, sondern senkrecht dazu angeordnet sein, also insbesondere horizontal relativ in dem Anlagengehäuse 20 angeordnet sein. Mittels des Sensorsystems 40 kann eine Ablagerung einer elektrisch leitfähigen Fremdstoffschicht auf dem elektrischen Isolator 35 detektiert werden. Dabei kann beispielsweise eine elektrisch leitfähige Fremdstoffschicht zwischen den ersten Stromleitern 36.1, 36.2 kritisch sein, da diese bei einem elektrischen Überschlag zu einem Kurzschluss führen kann.

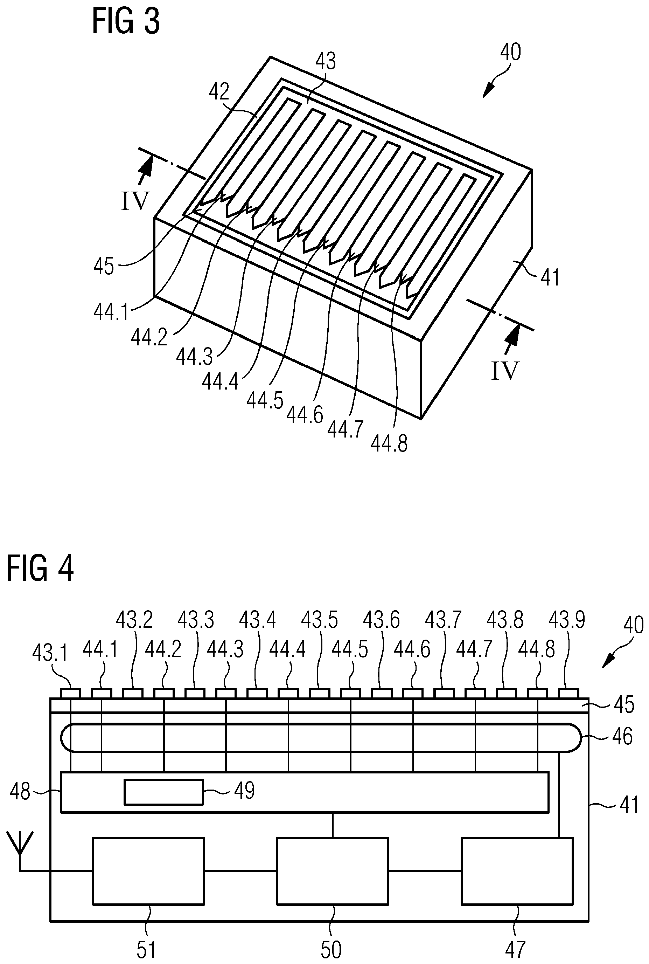

Figur 3 zeigt eine perspektivische Seitenansicht auf das Sensorsystem 40 der elektrischen Anlage 30 aus Fig. 2. Das Sensorsystem 40 weist ein Sensorgehäuse 41 und die darauf angeordnete Messfläche 42 auf. Die Messfläche 42 wird durch einen Träger 45 gebildet, der vorliegend aus dem gleichen Material wie der elektrische Isolator 35 gebildet ist, damit die Messfläche 42 dieselben Haftungseigenschaften für Fremdstoffe wie der elektrische Isolator 35 aufweist. Auf dem Träger 45 ist eine kammförmig und als Leiterbahn ausgebildete erste Elektrode 43 angeordnet. Ferner sind weitere Leiterbahnen 44.1, 44.2, 44.3, 44.4, 44.5, 44.6, 44.7, 44.8 einer zweiten Elektrode 44 auf dem Träger 45 angeordnet und mit der ersten Elektrode 43 verschachtelt. Die erste Elektrode 43 und die Leiterbahnen44.1, 44.2, 44.3, 44.4, 44.5, 44.6, 44.7, 44.8 der zweiten Elektrode 44 sind voneinander beabstandet.

Figur 4 zeigt eine Ansicht eines Schnittes entlang der Linie X-X durch das Sensorsystem 40 aus Fig. 3. Hier ist zu sehen, dass das Sensorsystem 40 ferner eine Heizvorrichtung 46, eine mit der Heizvorrichtung 46 verbundene Regelungsvorrichtung 47, eine mit der ersten Elektrode 43 und den Leiterbahnen 44.1, 44.2, 44.3, 44.4, 44.5, 44.6, 44.7, 44.8 der zweiten Elektrode 44 verbundene Messschaltung 48, die eine Spannungsquelle 49 aufweist, sowie eine Auswerteeinheit 50 und ein drahtloses Kommunikationsgerät 51 aufweist.

Die Stromquelle 49 ist in dem vorliegenden Ausführungsbeispiel als eine Wechselspannungsquelle ausgebildet und gibt Strom mit Wechselspannung an die erste Elektrode 43 und die zweite Elektrode44 ab. Dabei wird aufgrund der abwechselnden Beabstandung der Leiterbahnen 43.1, 43.2, 43.3, 43.4, 43.5, 43.6, 43.7, 43.8, 43.9 der ersten Elektrode 43 von den Leiterbahnen 44.1, 44.2, 44.3, 44.4, 44.5, 44.6, 44.7, 44.8 der zweiten Elektrode 44 nur ein geringfügiger oder kein Strom zwischen diesen übertragen, wenn sich keine elektrisch leitfähige Fremdstoffschicht auf der Messfläche 42, insbesondere zwischen den Leiterbahnen 43.1, 43.2, 43.3, 43.4, 43.5, 43.6, 43.7, 43.8, 43.9 der ersten Elektrode 43 und den Leiterbahnen 44.1, 44.2, 44.3, 44.4, 44.5, 44.6, 44.7, 44.8 der zweiten Elektrode 44, befindet. Wenn sich jedoch eine elektrisch leitfähige Fremdstoffschicht auf der Messfläche 42 ablagert, wird ein Strom bzw. eine Veränderung des Stromes von der Messschaltung 48 gemessen. Ein von der Messschaltung 49 gemessener Parameter des Stromes, wie beispielsweise eine Stromstärke, gibt dabei Aufschluss über die Leitfähigkeit der elektrisch leitfähigen Fremdstoffschicht und somit über das Risiko einer Funktionsbeeinträchtigung der elektrischen Anlage infolge eines Kurzschlusses.

Die Auswerteeinheit 50 ist mit der Messschaltung 48 verbunden und wertet den gemessenen Parameter, hier die Stromstärke, aus. Die Auswerteeinheit vergleicht die gemessene Stromstärke mit einem vordefinierten Schwellenwert und gibt mittels des mit der Auswerteeinheit 50 verbundenen drahtlosen Kommunikationsgerätes 51 eine Meldung einer potentiellen Funktionsbeeinträchtigung der elektrischen Anlage an einen nicht gezeigten zentralen Computer der elektrischen Anlage 30 aus, wenn die gemessene Stromstärke den Schwellenwert überschritten hat. Dadurch können von dem zentralen Computer Maßnahmen zur Verhinderung der Funktionsbeeinträchtigung eingeleitet werden.

Damit eine potentielle Funktionsbeeinträchtigung noch vor der Funktionsbeeinträchtigung erkannt wird, regelt die Regelungsvorrichtung 47 ein Aufheizen der Messfläche 42 mittels der Heizvorrichtung 46, die vorliegend beispielsweise als eine Heizwendel ausgebildet sein kann, derart, dass die Temperatur der Messfläche 42 unterhalb der Temperatur der elektrischen Anlage 30 liegt, sodass zwischen der Temperatur der Messfläche 42 und der Temperatur der elektrischen Anlage 30 ein Temperaturabstand besteht. Dadurch kann eine potentielle Funktionsbeeinträchtigung aufgrund einer Kondensation an der Messfläche 42 erkannt werden, bevor es zu einer Kondensation an dem elektrischen Isolator 35 und damit zu der Funktionsbeeinträchtigung kommt, sodass noch rechtzeitig Gegenmaßnahmen ergriffen werden können, um die Funktionsbeeinträchtigung zu verhindern.

## Patentansprüche

1. Elektrische Anlage (30) mit einem Anlagengehäuse (20) und elektrischen Bauelementen (31, 33, 34), wobei die elektrischen Bauelemente (31, 33, 34) in dem Anlagengehäuse (20) angeordnet sind und zumindest zwei Stromleiter (36, 37) zumindest eines der elektrischen Bauelemente (31, 33, 34) mittels eines elektrischen Isolators (35) voneinander elektrisch isoliert sind, wobei die elektrische Anlage (30) ein Sensorsystem (40) aufweist, das zum Detektieren einer Ablagerung einer elektrisch leitfähigen Fremdstoffschicht auf dem elektrischen Isolator (35) ausgebildet ist, wobei das Sensorsystem (40) eine innerhalb des Anlagengehäuses (20) angeordnete Messfläche (42) aufweist, auf der zumindest zwei voneinander beabstandete Elektroden (43, 44) angeordnet sind, und das Sensorsystem (40) eine Messschaltung (48) aufweist, die dazu ausgebildet ist, einen Parameter zu messen, der von dem zwischen den zumindest zwei Elektroden (43, 44) fließenden Strom abhängt und einen Temperatursensor zum Erfassen einer Temperatur der elektrischen Anlage aufweist,
**dadurch gekennzeichnet,**
**dass** das Sensorsystem (40) eine Heizvorrichtung (46) zum Beheizen der Messfläche (42) und eine mit dem Temperatursensor und der Heizvorrichtung (46) verbundene Regelungsvorrichtung (47) aufweist, mittels derer (47) die Temperatur der Messfläche (42) auf eine Temperatur unterhalb der Temperatur der elektrischen Anlage (30) zu regeln, sodass zwischen der Temperatur der Messfläche (42) und der Temperatur der elektrischen Anlage (30) ein Temperaturabstand besteht.

2. Elektrische Anlage (30) nach Anspruch 1,
**dadurch gekennzeichnet, dass**
die zumindest zwei Elektroden (43, 44) als Leiterbahnen ausgebildet sind.

3. Elektrische Anlage (30) nach Anspruch 2,
**dadurch gekennzeichnet, dass**
zumindest eine der zumindest zwei Leiterbahnen kammförmig verläuft.

4. Elektrische Anlage (30) nach Anspruch 2 oder 3,
**dadurch gekennzeichnet, dass**
die zumindest zwei Leiterbahnen ineinander verschachtelt sind.

5. Elektrische Anlage (30) nach einem der voranstehenden Ansprüche,
**dadurch gekennzeichnet, dass**
die zumindest zwei Elektroden (43, 44) stromführend mit einer Wechselspannungsquelle (49) verbunden sind.

6. Elektrische Anlage (30) nach einem der voranstehenden Ansprüche,
**dadurch gekennzeichnet, dass**
die Messfläche (42) an und/oder auf dem elektrischen Isolator (35) angeordnet ist.

7. Elektrische Anlage (30) nach einem der voranstehenden Ansprüche,
**dadurch gekennzeichnet**, dass'
die Messfläche (42) innerhalb des Anlagengehäuses (20) horizontal oder im Wesentlichen horizontal angeordnet ist.

8. Elektrische Anlage (30) nach einem der voranstehenden Ansprüche,
**dadurch gekennzeichnet, dass**
ein Träger (45) der Messfläche (42), auf dem die zumindest zwei Elektroden (43, 44) angeordnet sind, das gleiche Isoliermaterial wie der elektrische Isolator (35) aufweist.

9. Elektrische Anlage (30) nach einem der voranstehenden Ansprüche,
**dadurch gekennzeichnet, dass**
eine Auswerteeinheit (50) mit der Messschaltung (48) verbunden ist und die Auswerteeinheit (50) dazu ausgebildet ist, den gemessenen Parameter des zwischen den zumindest zwei Elektroden (43, 44) fließenden Stromes mit einem Schwellenwert zu vergleichen und eine Meldung einer potentiellen Funktionsbeeinträchtigung der elektrischen Anlage (30) auszugeben, wenn der gemessene Parameter den Schwellenwert überschritten hat.

10. Elektrische Anlage (30) nach einem der voranstehenden Ansprüche,
**dadurch gekennzeichnet, dass**
die elektrische Anlage (30) ein Transformator ist.

11. Verfahren zum Feststellen einer potentiellen Funktionsbeeinträchtigung in einer elektrischen Anlage (30) nach einem der voranstehenden Ansprüche, wobei das Verfahren die Schritte aufweist:
- Erfassen einer Temperatur der elektrischen Anlage mittels des Temperatursensors;
- temperaturgesteuertes Beheizen der Messfläche mittels der Heizvorrichtung auf eine Temperatur unterhalb der erfassten Temperatur der elektrischen Anlage, sodass zwischen der Temperatur der Messfläche (42) und der Temperatur der elektrischen Anlage (30) ein Temperaturabstand besteht;
- Messen eines Parameters des zwischen den zumindest zwei Elektroden fließenden Stroms mittels der Messschaltung zur Detektion einer Ablagerung einer elektrisch leitfähigen Fremdstoffschicht; und
- Ausgeben einer Meldung einer potentiellen Funktionsbeeinträchtigung der elektrischen Anlage, wenn der gemessene Parameter einen vordefinierten Schwellenwert überschreitet.

12. Verfahren nach Anspruch 11, wobei das Verfahren ferner die Schritte aufweist:
- Ermitteln eines Anstieges des Parameters zwischen Messzeitpunkten des Messens, und
- Berechnen eines Schwellenzeitpunktes zu dem der Parameter voraussichtlich den Schwellenwert überschreiten wird anhand des Anstieges des Parameters.

## Claims

1. An electrical installation (30) with an installation housing (20) and electrical components (31, 33, 34), wherein the electrical components (31, 33, 34) are arranged in the installation housing (20) and at least two electric conductors (36, 37) of at least one of the electrical components (31, 33, 34) are electrically insulated from one another by means of an electrical insulator (35), wherein the electrical installation (30) has a sensor system (40) designed for detecting a deposition of an electrically conductive foreign material layer on the electrical insulator (35), wherein the sensor system (40) has a measuring surface (42) arranged within the installation housing (20), on which at least two electrodes (43, 44) are arranged spaced apart from one another, and the sensor system (40) has a measuring circuit (48) designed to measure a parameter which depends on the current flowing between the at least two electrodes (43, 44) and has a temperature sensor for sensing a temperature of the electrical installation,
**characterized in that**
the sensor system (40) has a heating device (46) for heating the measuring surface (42) and a regulating device (47) connected to the temperature sensor and the heating device (46), by means of which (47) the temperature of the measuring surface (42) to regulate to a temperature below the temperature of the electrical installation (30), so that there is a temperature difference between the temperature of the measuring surface (42) and the temperature of the electrical installation (30).

2. The electrical installation (30) according to claim 1, **characterized in that**
the at least two electrodes (43, 44) are designed as conductive tracks.

3. The electrical installation (30) according to claim 2, **characterized in that**
at least one of the at least two conductive tracks extends in a comb-shape.

4. The electrical installation (30) according to claim 2 or 3, **characterized in that**
the at least two conductive tracks are interlaced with one another.

5. The electrical installation (30) according to any of the preceding claims,
**characterized in that**
the at least two electrodes (43, 44) are connected to an AC voltage source (49) in a current-carrying manner.

6. The electrical installation (30) according to any of the preceding claims,
**characterized in that**
the measuring surface (42) is arranged at and/or on the electrical insulator (35).

7. The electrical installation (30) according to any of the preceding claims,
characterized in that'
the measuring surface (42) is arranged horizontally or substantially horizontally within the installation housing (20).

8. The electrical installation (30) according to any of the preceding claims,
**characterized in that**
a support (45) of the measuring surface (42) on which the at least two electrodes (43, 44) are arranged has the same insulating material as the electrical insulator (35).

9. The electrical installation (30) according to any of the preceding claims,
**characterized in that**
an evaluation unit (50) is connected to the measuring circuit (48) and the evaluation unit (50) is designed to compare the measured parameter of the current flowing between the at least two electrodes (43, 44) with a threshold value and to output a notification of a potential functional impairment of the electrical installation (30) when the measured parameter has exceeded the threshold value.

10. The electrical installation (30) according to any of the preceding claims,
**characterized in that**
the electrical installation (30) is a transformer.

11. A method for determining a potential functional impairment in an electrical installation (30) according to any of the preceding claims, wherein the method comprises the steps of:
- sensing a temperature of the electrical installation by means of the temperature sensor;
- temperature-controlled heating of the measuring surface by means of the heating device to a temperature below the sensed temperature of the electrical installation, so that there is a temperature difference between the temperature of the measuring surface (42) and the temperature of the electrical installation (30);
- measuring a parameter of the current flowing between the at least two electrodes by means of the measuring circuit for detection of a deposition of an electrically conductive foreign material layer; and
- outputting a notification of a potential functional impairment of the electrical installation when the measured parameter exceeds a predefined threshold value.

12. The method according to claim 11, wherein the method further comprises the steps of:
- identifying an increase of the parameter between measuring times of measuring, and
- calculating a threshold time at which the parameter is expected to exceed the threshold value based on the increase of the parameter.

## Revendications

1. Système électrique (30) comprenant un boîtier de système (20) et des composants électriques (31, 33, 34), dans lequel les composants électriques (31, 33, 34) sont disposés dans le boîtier de système (20) et au moins deux conducteurs de courant (36, 37) d'au moins un des composants électriques (31, 33, 34) sont isolés électriquement l'un de l'autre au moyen d'un isolant électrique (35), dans lequel le système électrique (30) comprend un système de capteur (40) conçu pour détecter un dépôt d'une couche de substance étrangère conductrice de l'électricité sur l'isolant électrique (35), dans lequel le système de capteur (40) comprend une surface de mesure (42) disposée à l'intérieur du boîtier de système (20), sur laquelle sont disposées au moins deux électrodes espacées (43, 44), et le système de capteur (40) comprenant un circuit de mesure (48) conçu pour mesurer un paramètre qui dépend du courant circulant entre les au moins deux électrodes (43, 44) et comporte un capteur de température pour détecter une température du système électrique,
**caractérisé en ce que**
le système de capteur (40) comporte un dispositif de chauffage (46) pour chauffer la surface de mesure (42) et un dispositif de commande (47) relié au capteur de température et au dispositif de chauffage (46), au moyen duquel (47) la température de la surface de mesure (42) doit être régulée à une température inférieure à la température du système électrique (30), de sorte qu'il existe une différence de température entre la température de la surface de mesure (42) et la température du système électrique (30).

2. Système électrique (30) selon la revendication 1,
**caractérisé en ce que**
les au moins deux électrodes (43, 44) sont conçues comme des pistes conductrices.

3. Système électrique (30) selon la revendication 2,
**caractérisé en ce**
**qu'**au moins une des au moins deux pistes conductrices est en forme de peigne.

4. Système électrique (30) selon la revendication 2 ou 3, **caractérisé en ce**
**qu'**au moins deux pistes conductrices sont imbriquées l'une dans l'autre.

5. Système électrique (30) selon l'une quelconque des revendications précédentes,
**caractérisé en ce que**
les au moins deux électrodes (43, 44) sont connectées de manière conductrice de courant à une source de tension alternative (49).

6. Système électrique (30) selon l'une quelconque des revendications précédentes,
**caractérisé en ce que**
la surface de mesure (42) est disposée sur et/ou contre l'isolant électrique (35).

7. Système électrique (30) selon l'une quelconque des revendications précédentes,
**caractérisé en ce que**
la surface de mesure (42) est disposée horizontalement ou sensiblement horizontalement à l'intérieur du boîtier de système (20).

8. Système électrique (30) selon l'une quelconque des revendications précédentes,
**caractérisé en ce**
**qu'**un support (45) de la surface de mesure (42), sur lequel sont disposées les au moins deux électrodes (43, 44), présente le même matériau isolant que l'isolant électrique (35).

9. Système électrique (30) selon l'une quelconque des revendications précédentes,
**caractérisé en ce**
**qu'**une unité d'évaluation (50) est connectée au circuit de mesure (48) et l'unité d'évaluation (50) est conçue pour comparer le paramètre mesuré du courant circulant entre les au moins deux électrodes (43, 44) avec une valeur seuil et pour émettre un message d'une éventuelle altération fonctionnelle du système électrique (30) si le paramètre mesuré a dépassé la valeur seuil.

10. Système électrique (30) selon l'une quelconque des revendications précédentes,
**caractérisé en ce que**
le système électrique (30) est un transformateur.

11. Procédé de détection d'une éventuelle altération fonctionnelle d'un système électrique (30) selon l'une quelconque des revendications précédentes, le procédé comprenant les étapes consistant à :
- détecter la température du système électrique à l'aide du capteur de température ;
- chauffer à température contrôlée la surface de mesure à l'aide du dispositif de chauffage à une température inférieure à la température détectée du système électrique, de sorte qu'il existe un écart de température entre la température de la surface de mesure (42) et la température du système électrique (30) ;
- mesurer un paramètre du courant circulant entre les au moins deux électrodes au moyen du circuit de mesure pour détecter un dépôt d'une couche de matière étrangère électriquement conductrice ; et
- émettre un message signalant un dysfonctionnement potentiel du système électrique lorsque le paramètre mesuré dépasse une valeur seuil prédéfinie.

12. Procédé selon la revendication 11, dans lequel le procédé comprend en outre les étapes consistant à :
- déterminer une augmentation du paramètre entre les temps de mesure, et
- calculer un temps seuil auquel le paramètre devrait dépasser le seuil en fonction de l'augmentation du paramètre.
